Europäisches Patentamt

European Patent Office

Office européen des brevets

(19)

(11) Publication number: **0 232 110 B1**

(12) **EUROPEAN PATENT SPECIFICATION**

(45) Date of publication of patent specification: **30.10.91**  (51) Int. Cl.⁵: **C08G 63/52**, C08G 69/44, C04B 26/18

(21) Application number: **87300685.2**

(22) Date of filing: **27.01.87**

(54) **Polymer modified unsaturated polyester or polyesteramide resins and polymer concrete made therefrom.**

(30) Priority: **27.01.86 US 822990**
**27.01.86 US 822991**

(43) Date of publication of application:
**12.08.87 Bulletin 87/33**

(45) Publication of the grant of the patent:
**30.10.91 Bulletin 91/44**

(84) Designated Contracting States:
**BE CH DE ES FR GB IT LI NL SE**

(56) References cited:
**EP-A- 0 062 373        EP-A- 0 109 452**
**EP-A- 0 166 453        GB-A- 1 195 902**
**US-A- 4 233 432        US-A- 4 409 371**

(73) Proprietor: **THE DOW CHEMICAL COMPANY**
**2030 Dow Center Abbott Road P.O. Box 1967**
**Midland Michigan 48640-1967(US)**

(72) Inventor: **Hefner, Robert E., Jr.**
**109 Wedgewood**
**Lake Jackson Texas 77566(US)**

(74) Representative: **Raynor, John et al**
**W.H. Beck, Greener & Co 7 Stone Buildings**
**Lincoln's Inn**
**London WC2A 3SZ(GB)**

## Description

The modification of unsaturated polyesters with the esterifiable reactive hydrocarbon dicyclopentadiene is a well established technology. Typical of this art are U.S. 4,370,447; 4,100,120; 4,148,765; 4,224,430; 4,233,432 and 4,246,367. Dicyclopentadiene is sold commercially as a product of 97 or greater percent purity. It is also sold as $C_{10}$ hydrocarbon concentrate prepared by dimerizing a crude $C_{10}$ stream from the cracking of hydrocarbons as taught in U.S. Patent No. 3,557,239. A preferred dicyclopentadiene source for use in modification of unsaturated polyesters is one that is low in peroxides and hydroperoxides and in light hydrocarbons and residual cyclopentadiene.

Dicyclopentadiene concentrates have as the main reactive component 70 to 90 percent by weight of dicyclopentadiene and 5 to 30 percent by weight of mixed Diels-Alder dimers of diolefins such as butadiene, cis- and trans- piperylene, isoprene, cyclopentadiene and methyl cyclopentadiene. The remainder of these concentrates generally comprise residual $C_5$ hydrocarbons and oligomers of the above diolefins. Examples of some of the dimers which have been identified in these concentrates are the Diels-Alder adducts of two moles of isoprene (isoprene dimers), the adduct of cyclopentadiene and isoprene, the adduct of cyclopentadiene and piperylene, and the like. These $C_{10}$ hydrocarbon streams have very little or no ethylenically unsaturated aromatic hydrocarbons such as styrene. It is notable that the prior art teaches both the use of the $C_{10}$ concentrate or the relatively pure dicyclopentadiene as sources of esterifiable hydrocarbon reactives for the modification of unsaturated polyesters.

More recently, modification of unsaturated polyesteramides with the aforementioned dicyclopentadiene or $C_{10}$ concentrates has been described. Typical of this art are U.S. Patent Nos. 4,410,686; 4,409,371 and 4,471,101.

Polymer concretes are well known from U.S. patents 4,346,050; 4,371,639; 4,375,489 and the references cited therein. The use of polymers in concrete is further reviewed in "Chemical, Polymer and Fiber Additives for Low Maintenance Highways" by Hoff et al. Noyes Data Corp 1979 pages

The present invention provides a new class of modified unsaturated polyesters and polyesteramides having improvements in one or more mechanical properties such as tensile strength, elongation and flexural strength as well as reduced shrinkage upon curing.

It has now been found that the use of the novel polymer modified unsaturated polyester and polyesteramide resins to prepare polymer concretes provides unexpected increases in both wet and dry compressive bond strength and in tensile strength over polymer concretes prepared using known prior art unsaturated thermosettable resins.

The present invention concerns the polymer modified unsaturated polyesters or polyesteramides prepared by reacting under polymerization conditions

(A) one or more alpha, beta ethylenically unsaturated polycarboxylic acids, anhydrides, or mixtures thereof with or without one or more saturated or aromatic polycarboxylic acids or anhydrides thereof

(B) an effective amount of water,

(C) one or more polyols or a mixture of one or more polyols and polyamines and

(D) a hydrocarbon mixture comprising

(1) esterifiable hydrocarbons,

(2) ethylenically unsaturated aromatic hydrocarbons with or without polymerized derivatives thereof and

(3) non-reactive hydrocarbons.

In another aspect, the present invention concerns a thermosettable polymer concrete composition comprising

(A) 2 to 20, preferably 8 to 15 percent by weight (pbw) of aforementioned polymer modified unsaturated polyester or polyesteramide resin, and

(B) 98 to 80, preferably 92 to 85 pbw of an aggregate.

A further aspect of the present invention concerns cured polymer concrete compositions obtained by curing of the polymer modified unsaturated polyester or polyesteramide resin and aggregate composition with known catalyst systems.

Typical ethylenically unsaturated polycarboxylic acids that are useful herein include maleic acid, fumaric acid, itaconic acid, maleic anhydride, and mixtures thereof. The remainder, if any, of the polycarboxylic acids are usually either saturated normal aliphatics such as adipic acid, succinic acid and the like or aromatics such as phthalic acid, phthalic anhydride, isopthalic acid and the like. The term polycarboxylic acid, as used herein, is intended to embrace the anhydride as well.

The ethylenically unsaturated polycarboxylic acid and/or anhydride provides the unsaturation needed for curing the resin. Therefore, the actual ratio of unsaturated acid to saturated or aromatic acid will be dictated by the degree of crosslinking desired in the cured product. That degree of crosslinking may be predetermined by simple preliminary experiments as is standard in the polyester art. The polycarboxylic acid is preferably maleic acid, fumaric acid, maleic anhydride or mixtures of those compounds.

The polyols that are useful herein are those which are reactive with polycarboxylic acids and/or anhydrides and may include, for example, the diols, such as ethylene glycol, propylene glycol, diethylene glycol, dipropylene glycol, butanediol, hexanediol, dicyclopentadiene dimethanol, triethylene glycol, polyethylene glycol and the polyols, such as polypropoxylated glycerin, polyethoxylated glycerin, pentaerythritol, glycerine, sorbitol; and trimethylolpropane. Mixtures of two or more of such polyols can be used. The polyol is preferably ethylene glycol, propylene glycol, a glycerin polypropoxylate or mixtures of those polyols.

The esterifable hydrocarbon reactives that are useful herein include, for example, dicyclopentadiene, $C_{10}$ hydrocarbon concentrates, polycyclopentadiene-(dicyclopentadiene oligomers), norbornene, and mixtures thereof. Especially preferred are dicyclopentadiene and $C_{10}$ hydrocarbon concentrates.

For the purposes of this invention, an effective amount of water is that quantity which provides 1.1 to 2.0 moles per mole of unsaturated polycarboxylic acid or anhydride. A preferred range is about 1.5 to 2.0 moles of water per mole of unsaturated acid or anhydride.

The ethylenically unsaturated aromatic hydrocarbons that are useful herein include, for example, styrene, vinyl toluenes, allyl benzene, dimethyl styrenes, and mixtures thereof. Especially preferred are styrene and the vinyl toluenes.

The non-reactive hydrocarbons that are optionally present in the mixture containing esterifiable hydrocarbon reactives and ethylenically unsaturated aromatic hydrocarbons are those which are not reactive with the other components used to prepare the unsaturated polyesters and polyesteramides of the present invention. Included are aliphatic, cycloaliphatic, aromatic, alkylaromatic, polyalkylaromatic hydrocarbons and the like. Typical examples of said non-reactive hydrocarbons are toluene, xylene, and cyclohexane.

Typical polyamines that are useful herein to make the polyesteramide resins are those that are reactive with polycarboxylic acids and/or anhydrides and may include, for example, the diamines, such as ethylene diamine, propylene diamine, hexane-1,6-diamine, piperazine, 2-2'-bis(4-aminocyclohexyl) propane, bis-(aminomethyl) norbornane, toluene diamine and thepolyamines, such as aminoethylpiperazine and diethylenetriamine. Mixtures of two or more of such polyamines can be used. The polyamine is preferably piperazine.

The mixture containing esterifiable hydrocarbon reactives, ethylenically unsaturated aromatic hydrocarbons and, optionally, non-reactive hydrocarbons may be obtained by direct blending of the required components or, more preferably, as a resin oil distillation cut from hydrocarbon processing. For purposes of the present invention, said resin oils consist of three distinct types of components: esterifiable hydrocarbon reactives including, for example, dicyclopentadiene, methyl dicyclopentadiene, cyclopentadiene codimers, diolefin dimers and the like; ethylenically unsaturated aromatic hydrocarbons including, for example, styrene and vinyl toluenes; and non-reactive hydrocarbons including aliphatic, cycloaliphatic, aromatic, alkyl-aromatic, polyalkyaromatic hydrocarbons and the like.

The composition of the resin oil can vary within wide limits depending on the hydrocarbon feed-stock being processed, the type of process, the distillation conditions and many other known variables. The amount of the esterifiable hydrocarbon reactives component useful in the reactions of the present invention can vary from 25 percent by weight (pbw) to 95 pbw. The amount of the ethylenically unsaturated aromatic hydrocarbon component can vary from 5 pbw to 50 pbw. The remainder is the non-reactive hydrocarbon component. A typical resin oil composition is given in U.S. 4,247,335 (Col. 2).

The mixture containing esterifiable hydrocarbon reactives, ethylenically unsaturated aromatic hydrocarbons and, optionally, non-reactive hydrocarbons may be reacted with a free radical forming catalyst at a time and temperature suitable to induce polymerization of all or a part of the ethylenically unsaturated aromatic hydrocarbons contained therein. Said total or partial polymerization of the ethylenically unsaturated aromatic hydrocarbons is thus completed prior to reaction of the esterifiable hydrocarbon reactives in an unsaturated polyester or polyesteramide forming reaction. Suitable free radical forming catalysts include the organic peroxides and hydroperoxides as well as the azo and diazo compounds. Representative of said free radical forming catalysts are benzoyl peroxide, t-butylhydroperoxide, cumene hydroperoxide, azobisisobutyronitrile, and mixtures thereof. An inert atmosphere, such as is provided by nitrogen or argon gas, is typically employed in the total or partial polymerization reaction.

The hydrocarbon mixture is used preferably in an amount to provide from 0.25 to 1.0 moles of esterifiable hydrocarbons per mole of unsaturated polycarboxylic acid or ahydride.

The ethylenically unsaturated aromatic hydrocarbons present in mixtures of esterifiable hydrocarbon reactives, ethylenically unsaturated aromatic hydrocarbons, and non-reactive hydrocarbons may be polymerized to the extent of 5 to 100 percent and preferably to the extent of 10 to 50 percent.

3

The preferred process of the present invention is the "prehydrolysis method" wherein a molten polycarboxylic anhydride is essentially totally hydrolyzed with stoichiometric or greater equivalency of water and reacted with the mixture containing esterifiable hydrocarbon reactives, ethylenically unsaturated aromatic hydrocarbons and, optionally, non-reactive hydrocarbonswherein none, a part, or all of the ethylenically unsaturated aromatic hydrocarbons are polymerized. The prehydrolysis reaction product is a mixture of polycarboxylic acid esters of the esterifiable hydrocarbon reactives containing unesterified acid, non-reactive hydrocarbons, if any are present, and polymerization products of the ethylenically unsaturated aromatic hydrocarbons. The term polymerization, as is used herein, is meant to encompass dimers, oligomers, copolymers, and homopolymers. This reaction may conveniently be performed in stages whereby reactants are added stepwise thus controlling reaction exotherms.

It is most preferred that a stoichiometric excess of water be used if the mixture containing esterifiable hydrocarbon reactives, ethylenically unsaturated aromatic hydrocarbons and, optionally, non-reactive hydrocarbons contains substantial amounts (2 percent by weight or more) unpolymerized (i.e. monomeric) ethylenically unsaturated aromatic hydrocarbons. A stoichiometric excess of at least 10 mole percent and preferably 50 to 100 mole percent or more based on moles of polycarboxylic anhydride reactant is most preferred. The use of less than stoichiometric amounts of water can favor the presence of non-hydrolyzed polycarboxylic anhydride at the reaction temperatures typically employed. This polycarboxylic anhydride can enter into copolymerization reaction with the ethylenically unsaturated aromatic hydrocarbons thus producing a polymeric anhydride. The net result of the copolymerization can be eventual gelation of the reactor as well as substantial reduction in a,b unsaturated groups as provided by the polycarboxylic acid and used for later crosslinking reaction. The latter result can lead to a resin of poor curability and reactivity.

When a non-reactive hydrocarbon component is present, such as, for example, if a resin oil is used, a substantial amount of the non-reactive hydrocarbon component and water may azeotropically distill out of the reaction mixture. This material is preferably recycled back into the reactor during the prehydrolysis or contained in the reactor either under reflux or moderate pressure as is required to maintain the proper water stoichiometry.

In a typical procedure, molten maleic anhydride and a 75 mole percent excess of water are maintained at an elevated temperature of from $100°$ to $150°C$. The temperature is allowed to stabilize at $100°$ to $110°C$ then a mixture of dicyclopentadiene (80 pbw) and styrene (20pbw) is added at a rate which maintains a reaction temperature between $100°$ to $130°C$. The amount of maleic (or other) anhydride employed in this prehydrolysis step may be equal to the equivalent of dicyclopentadiene in which event the product is essentially monoester (dicyclopentadienyl monomaleate) containing lesser amounts of diester [bis(dicyclopentadienyl maleate)], dicyclopentadienyl monoalcohol, maleic anhydride, maleic acid, polystyrene and the like. Alternatively, the amount of anhydride may be the equivalent needed to make the monoester plus that excess that is to be used in the subsequent esterification (or esteramidation) step. It is notable that reductions in the water stoichiometry (either in the initial charge or reductions incurred via distillative stripping during the reaction) favor retention of maleic anhydride and thus formation of styrene - maleic anhydride copolymer, a polyanhydride.

To the mixture of polycarboxylic acid esters of the esterifiable hydrocarbon reactives containing unesterified acid, non-reactive hydrocarbons, if any are present, and polymerization products of the ethylenically unsaturated aromatic hydrocarbon is added the polyol and a polyamine, if used. When a polyamine is used, that addition can be a bulk addition wherein all of the polyol and polyamine are added in one step. Alternately the addition can be an incremental addition wherein all of the polyol and a fractional equivalent of the polyamine are added initially and allowed to react after which subsequent increments of polyamine are added. In all instances, water is continuously removed during the esterification (esteramidation step). The timing of the remaining polyamine additions can be easily determined by the amount of water removed, by acid number or by viscosity. Incremental polyamine addition aids in the control of reaction exotherm when some polyamines are used.

After addition of polyol and, optionally, polyamine is complete, the reaction can be driven to maximum yield by maintaining or increasing the temperature until the desired acid number has been achieved. Typically, acid numbers of 15 to 40 are preferred, with 20 to 35 most preferred. Acid numbers that are somewhat higher or lower may be tolerated and, in some instances, may be desired for certain applications.

The "hydrolysis" method wherein molten polycarboxylic anhydride, is partially hydrolyzed with less than the stoichiometric equivalent of water and reacted with the mixture containing esterifiable hydrocarbon reactives, ethylenically unsaturated aromatic hydrocarbons and, optionally, non-reactive hydrocarbons is only satisfactory for use with aforesaid mixtures wherein all or a substantial part of the ethylenically unsaturated aromatic hydrocarbons have been polymerized. Generally less than 5 pbw unreacted (monomeric) ethylencally unsaturated aromatic hydrocarbons should be present in the mixture if the hydrolysis method is employed.

In a typical procedure, molten maleic anhydride and a fraction of the stoichiometric equivalent of water are maintained at an elevated temperature of from 60°C to 130°C. The initial fractional equivalent of dicyclopentadiene containing 18 pbw of styrene polymerization products and 2 pbw or less styrene (prepared by free radical polymerization in situ of 20 pbw styrene in 80 pbw dicyclopentadiene) is added then allowed to react. A second fractional equivalent of water and of dicyclopentadiene containing styrene polymerization products is added and allowed to react. Additional fractional equivalents are added and each allowed to react before subsequent addition of the next increment until the desired amount of reactants have been added.

The polyol and polyamine, if used, are added to the hydrolysis reaction product and reacted as described in the aforementioned prehydrolysis method.

When a mixture containing a non-reactive hydrocarbon component such as, for example, a resin oil, is used, a substantial amount of the non-reactive hydrocarbon component is removed along with the water from the reaction. Lesser amounts of non-reactive hydrocarbon component can be left in the unsaturated polyester or polyesteramide to serve as a plasticizer which flexibilizes the unsaturated polyester or polyesteramide thus resulting in improved mechanical properties.

The products of the present invention are designated as polymer modified unsaturated polyesters and polyesteramides due to the presence of a dispersed polymer component derived from in situ polymerization of the ethylenically unsaturated aromatic hydrocarbon portion of the reactants used.

In other words, the result of the polymerization of the unsaturated aromatic hydrocarbons is a hydrocarbon polymer modified unsaturated polyester or polyesteramide resin.

As is common in the unsaturated polyester and polyesteramide art, the polymer modified unsaturated polyesters (polyesteramides) of this invention may be blended with an ethylenically unsaturated monomer such as vinyl and acrylic monomers that is compatible therewith. Typical of the vinyl monomers are the alkenyl aromatics, such as styrene, vinyltoluenes or chlorostyrenes. Acrylic monomers, although less preferred, may also be used separately or in conjunction with the vinyl aromatic monomer. Typical of the acrylic monomers is methylmethacrylate. Other useful vinyl monomers will be well known to the skilled artisian. The vinyl monomer, frequently called a reactive diluent, may be employed within a wide range of concentration of from 20 to 80 percent of diluent to 80 to 20 percent of resin. The optimum amount will depend in large measure on the unsaturated polyester or polyesteramide, the diluent, and the properties desired in the cured and uncured states. Reactive diluents are employed principally to adjust the viscosity of a resin blend to permit its facile use in a given fabrication procedure and the polymer concrete formulations.

Other additives that are conventional to the unsaturated polyester art may also be included in formulations based upon the resins of the present invention. Thus fillers, pigments and other colorants, reinforcing fibers, stabilizers, shrinkage control agents, other resins and polymers and other additives may be added to serve their intended function.

The polymer modified unsaturated polyesters or polyesteramides have properties that make them well adapted for coating, casting, lamination, molding, filament winding, pultrusion and other known fabrication procedures. A preferred use is in castings, encapsulations and the like which benefit from the reduced shrinkage upon curing inherent to the resins of the present invention. Also, the preferred use is in the polymer concrete formulations.

The polymer modified unsaturated polyesters or polyesteramides are curable by known catalyst systems including the previously described free-radical forming catalysts. Peroxides, such as methylethylketone peroxide, can be used with or without known promoters, such as cobalt octoate or cobalt naphthenate, that function with such peroxides. Acyl peroxides, such as benzoyl peroxides, can be used with or without promoters, such as tertiary amines, typically including N,N-dimethyl aniline and N,N-dimethyl-p-toluidine. The concentrations of catalyst and promoter are adjusted within known limits of 0.05 to 3.0 weight percent depending on the rate of cure desired, the magnitude of the generated exotherm and for other known purposes. Known gelation retarding agents, such as p-benzoquinone, can be employed in the curing system.

Polymer concrete is a composition made by blending of a curable resin component and an aggregate component. The polymer concrete composition of the present invention is prepared by blending from 2 percent to 20 percent by weight of the polymer modified unsaturated polyester or polyesteramide resin with from 98 to 80 percent by weight of an aggregate component.

The aggregate component is typically sand, gravel, crushed stone or rock, silica flour, fly ash, or mixtures thereof. Up to 50 percent by weight of metal fines, glass fibers, synthetic fibers, glass reinforcing mats, glass strands, glass filaments, metal turnings, metal fibers, mineral powders and the like or mixtures thereof may be present in the aggregate composition. The exact components used in the aggregate composition are generally dictated by the physical properties required of the cured polymer concrete composition. Thus, optimal aggregate particle size distribution can be determined by simple preliminary experiments. Preparation of typical aggregates is described in ASTM C 33-82, ASTM D 448-80 and AASMO Designation M 6-65.

The polymer concrete compositions of the present invention are curable by known catalyst systems including the previously described free-radical forming catalysts. Peroxides, such as methylethylketone peroxide, can be used with or without known promoters, such as cobalt octoate or cobalt naphthenate, that function with such peroxides. Acyl peroxides, such as benzoyl peroxides, can be used with or without promoters, such as tertiary amines, typically including N,N-dimethylaniline and N,N-dimethyl-p-toluidine. The concentrations of catalyst and promoter are adjusted within known limits of 0.05 to 5.0 weight percent depending on the rate of cure desired, the magnitude of the generated exotherm and for other known purposes. Known gelation retarding agents, such as p-benzo-quinone, can be employed in the curing system.

Other additives that are conventional to the polymer concrete art may also be included in the formulations based upon the polymer modified unsaturated polyester or polyesteramide resin and aggregate compositions of the present invention. Thus pigments and other colorants; polymeric shrinkage control agents such as, for example, polystyrene, saturated polyester, polyvinyl acetate and the like, waxes, mold release agents and other resins, polymers and additives may be added to serve their intended function.

The polyester concretes of the present invention benefit from the low shrinkage on curing inherent to the polymer modified unsaturated polyester or polyesteramide component. Because of their high mechanical strength and excellent compressive bond strength to both wet and dry concrete surfaces, the polymer concretes of the present invention are especially well suited for use in repair of spalled, cracked or otherwise damaged concrete surfaces; for fabrication of precast parts such as machine bases and for lining of pipe and trenches.

The following examples are given to illustrate the invention and not to limit the scope of the invention. All parts and percentages are by weight unless otherwise specified.

## EXAMPLE 1

Maleic anhydride (306.97 g) was added to a reactor and heated to 135°C with stirring under a nitrogen atmosphere. Water (62.04 g) was added and immediately induced a maximum exotherm of 143°C with the 135°C temperature being reestablished within 5 minutes. Five minutes after the initial water addition, a commercial grade resin oil designated as Resin Oil 80 (hereinafter RO-80) and produced by The Dow Chemical Company, 115.12 g) was added to the reactor, the steam condenser was started, and nitrogen sparging was increased. A maximum exotherm of 142°C occurred 1 minute after the initial RO-80 addition. Additional RO-80 (115.12 g) was added 15 minutes after the initial RO-80 addition, and 19 ml of water collected in the Dean Stark trap was removed and recycled to the reactor. A final portion of RO-80 (115.12 g) was added 15 minutes later. The yellow-colored slurry was held for 30 minutes at 135°C, after which time the temperature controller was set at 160°C. Thirteen minutes later, 155°C was reached and a propylene glycol/dipropylene glycol mixture (118.72 g/209.32 g) was added to the reactor. The 160°C temperature was achieved 12 minutes later. After 2 hours at 160°C, the temperature controller was set at 205°C, and this temperature was achieved 32 minutes later. After 2.5 hours, a total of 91.5 ml of water layer and 100.5 ml of organic material were collected in the Dean Stark trap. The reactor was cooled to 168°C and 100 ppm of hydroquinone were added. The modified unsaturated polyester was recovered as a transparent, light yellow-colored, tacky solid with a final acid number of 27.0.

A formulation containing 57.0 percent polyester and 43.0 percent styrene was prepared and the physical and mechanical properties were determined. The heat distortion bars were cured at a room temperature of 25°C (77°F) using 0.1 percent cobalt naphthenate (6 percent), 1 percent methyl ethyl ketone peroxide, and 0.02 percent dimethylaniline. The room temperature cured bars were post-cured for 2.0 hours at 93°C (200°F). Clear, unfilled castings for use in tensile and flexural strength evaluations were made using a cure system of 1.0 percent benzoyl peroxide and 0.01 percent dimethylaniline at room temperature, followed by post-curing for 2.0 hours at 93°C (200°F). Heat distortion temperatures (HDT) were determined using an Aminco Plastic Deflection Tester with standard methods (ASTM D-648). Mechanical properties of tensile (8) and flexural (6) test pieces were determined using an Instron machine with standard methods (ASTM D-638 and D-790). Brookfield viscosity was measured at 25°C. All Barcol hardness values (average of ten) were on the 934-1 scale. The results are summarized in Table I.

TABLE I

| Brookfield Viscosity (Pa•s) | .035 |
|---|---|
| SPI Gel Time (min) | 5.6 |
| Cure Time (min) | 10.5 |
| Max. Exotherm (°C) | 147 |
| Heat Distortion Temperature (°F) | 137 |
| (°C) | 58.3 |
| Average Barcol Hardness | 34 |
| Tensile Strength x 10 (psi) | 7.632 |
| [kPa x 10] | [52.62] |
| Elongation (%) | 2.75 |
| Flexural Strength x $10^4$ (psi) | 1.2320 |
| [kPa x $10^4$] | [8.495] |

Capillary gas chromatographic-mass spectroscopic analysis of the RO-80 used in Example 1 provided the following results:

| | Weight Percent |
|---|---|
| toluene | 0.11 |
| p-xylene | 0.15 |
| m-xylene | 0.26 |
| o-xylene | 0.73 |
| styrene | 2.03 (2) |
| 1-methyl-4-ethylbenzene | 0.64 |
| 1-methyl-3-ethylbenzene | 4.89 |
| allylbenzene | 0.87 (2) |
| 1,3,5-trimethylbenzene | 1.54 |
| 1-methyl-2-ethylbenzene | 1.31 |
| 1,2,4-trimethylbenzene | 4.24 |
| α methylstyrene | 2.29 (2) |
| dicyclopentadiene | 30.19 (1) |
| vinyl toluene | 18.61 (2) |
| indene | 12.85 (1) |
| methyl indenes | 1.25 (1) |
| naphthalene | 1.25 |
| 2-methyl naphthalene | 0.02 |
| others | 16.77 |

Based on this analysis, the esterified hydrocarbon reactives component (1) comprises 44.29 percent by weight, the ethylenically unsaturated aromatic hydrocarbon reactives component (2) comprises 23.80 percent by weight and the nonreactive hydrocarbons component comprises the balance by difference.

EXAMPLE 2

Maleic anhydride (3.13 moles, 306.97 g) was added to a reactor and heated to 135°C under a nitrogen atmosphere with stirring. Water (3.443 moles, 62.04 g) was added and immediately induced a maximum exotherm of 143°C with the 135°C temperature being reestablished 2 minutes later. Five minutes after the initial water addition, partially polymerized RO-80 (115.12 g) was added to the reactor. A maximum exotherm of 141°C occurred 1 minute later. Air cooling of the reactor exterior reduced the reactor temperature to 135°C. A second portion of partially polymerized RO-80 (115.12 g) was added 15 minutes after the initial RO-80 addition. A final portion of partially polymerized RO-80 (115.12 g) was added 15 minutes later and the 135°C reaction temperature was reachieved 2 minutes later. After 30 minutes, a propylene glycol/dipropylene glycol mixture (1.56 moles, 118.72 g/1.56 moles, 209.32 g) was added to the reactor and the steam condenser was started. Nitrogen sparging was increased to 0.5 liter per minute, and the temperature controller was set at 160°C. The 160°C temperature was reached 19 minutes later. After 2 hours at 160°C, the temperature controller was set at 205°C and this temperature was achieved 25 minutes later. After 14.0 hours, a total of 103.5 ml of water layer and 82 ml of organic material were collected in the Dean Stark trap. The reactor was cooled to 165°C and 100 ppm of hydroquinone were added. The modified unsaturated polyester was recovered as a transparent, light yellow-colored solid with a final acid number of 11.5.

The partially polymerized RO-80 used in this example was obtained by treating the RO-80 of Example 1 to 0.23 percent by weight of azobisisobutyronitrile and reacting the mixture for 2 hours at 70°C a nitrogen atmosphere. The reaction product was then treated with 0.12 percent by weight of benzoyl peroxide and the mixture was reacted for one hour at 100°C in a nitrogen atmosphere.

The recovered RO-80 product containing polymerized ethylenically unsaturated aromatic hydrocarbon reactives possessed a Brookfield viscosity (25°C) of 130 cp (0.13 Pa•s) (versus less than 5 cp (0.005 Pa•s) for the non-polymerized RO-80) and was a transparent, homogenous solution.

A portion of the modified, unsaturated polyester (199.5 g) and styrene (150.5 g) were formulated to provide a 57.0, 43.0 percent solution, respectively. The physical and mechanical properties were determined using the method of Example 1. The results are summarized in Table II.

## TABLE II

| | |
|---|---|
| Brookfield Viscosity (Pa·s) | 0.560 |
| SPI Gel | |
| Gel Time (min) | 3.5 |
| Cure Time (min) | 6.1 |
| Max. Exotherm (°C) | 201 |
| Heat Distortion Temperature (°F) [°C] | 209 [98.3] |
| Average Barcol Hardness | 43 |
| Tensile Strength x 10 (psi) [kPa x 10⁴] | 8.3 [57.23] |
| Elongation (%) | 2.1 |
| Flexural Strength x 10 (psi) [kPa x 10] 10⁴ | 14.3 [98.6] |
| Flexural Modulus x 10⁴ (psi) [kPa x 10⁴] 10⁴ | 59.0 [406.8] |

## EXAMPLE 3

Maleic anhydride (5.00 moles, 490.3 g) was added to a reactor and heated to 100°C under a nitrogen atmosphere with stirring. Water (5.50 moles, 99.11 g) was added and induced a maximum exotherm of 139°C two minutes later. Cooling reduced the reactor temperature to 130°C after an additional 5 minutes. Fifteen minutes after the initial water addition, a commercial grade of resin oil designated as Resin Oil 60 (hereinafter RO-60) and produced by The Dow Chemical Company (288.1 g) was added to the reactor. A maximum exotherm of 143°C occurred 2 minutes later. Cooling reduced the reactor temperature to 130°C. A second portion of Resin Oil 60 (288.1 g) was added 15 minutes after the initial RO-60 addition. A final portion of RO-60 (288.1 g) was added 15 minutes later, and the 130°C reaction temperature was reachieved 3 minutes later. Thirty minutes after the addition of the final portion of RO-60, propyleneglycol (3.00 moles, 228.3 g) was added to the reactor, the steam condenser was started, nitrogen sparging was increased to 0.75 liter per minute and the temperature controller was set at 160°C. The 160°C temperature was achieved 26 minutes later. After 2 hours at 160°C, the temperature controller was set at 205°C and this temperature was achieved 14 minutes later. After 10 hours, a total of 115 ml of water layer and 174 ml of organic material were collected into the Dean Stark trap. The reactor was cooled to 165° C and 100 ppm of hydroquinone were added. The modified unsaturated polyester was recovered as a transparent, light yellow-colored solid with a final acid number of 30.1. Mass balance calculations verified that essentially all of the esterifiable hydrocarbon reactives and ethylenically unsaturated aromatic hydrocarbons were incorporated into the polyester while in excess of 95 percent of the nonreactive hydrocarbons were recovered into the Dean Stark trap.

Capillary gas chromatographic-mass spectroscopic analysis of the RO-60 demonstrated the following composition: 64.36 weight percent esterifiable hydrocarbon reactives composed of cyclopentadiene (2.95 percent), butadiene/cyclopentadiene codimers (3.96 percent), dicyclopentadiene (45.81 percent), indene (4.37 percent), isoprene/cyclopentadiene codimer (1.49 percent) and methylcyclopentadiene/cyclopentadiene codimer (5.78 percent); 16.14 weight percent ethylenically unsaturated aromatic hydrocarbon reactives composed primarily of styrene and less than 1 percent vinyl toluene; and 19.50 weight percent nonreactive hydrocarbons composed of toluene (0.12 percent), naphthalene (0.30 percent), xylenes, ethylbenzenes, trimethylbenzenes, methylethylbenzenes, and the like.

A portion of the modified unsaturated polyester (199.5 g) and styrene (150.5 g) were formulated to provide a 57.0, 43.0 percent solution, respectively. The physical and mechanical properties were determined using the method of Example 1. Unnotched Izod impact was determined using ten 2.5 x 0.5 x 0.125 inch (6.35 x 1.27 x 0.318 cm) test pieces prepared from the clear, unfilled casting. The unnotched Izod impact was evaluated for the series of test pieces using a TMI Impact Tester No. 43-1 with standard methods (ASTM D-256). The results are reported in Table III.

## TABLE III

| | |
|---|---|
| Brookfield Viscosity (Pa·s) | 0.251 |
| SPI Gel | |
| Gel Time (min.) | 3.2 |
| Cure Time (min.) | 7.7 |
| Max. Exotherm (°C) | 166 |
| Average Barcol Hardness | 42 |
| Heat Distortion Temp. (°F) | 182 |
| [°C] | [83.3] |
| Tensile Strength x 10 (psi) | 7.402 |
| [kPa x 10] | [51.035] |
| Elongation (%) | 1.50 |
| Flexural Strength x 10 (psi) | 12.139 |
| [kPa x 10] | [83.695] |
| Flexural Modulus x $10^4$ (psi) | 65.3 |
| [kPa x $10^4$] | [450.228] |
| Izod Impact, unnotched (ft.-lbs/in.) | 1.9 |
| [Joules/m] | [101.42] |

## EXAMPLE 4

Maleic anhydride (5.00 moles, 490.3 g) was added to a reactor and heated to 100° C under a nitrogen atmosphere with stirring. Water (5.50 moles, 99.11 g) was added and induced a maximum exotherm of 138° C one minute later. Cooling reduced the reactor temperature to 130° C after an additional 3 minutes. Fifteen minutes after the initial water addition, a commercial grade of resin oil designated as RO-60 (288.1 g) was added to the reactor. The composition of the RO-60 was identical to that delineated in Example 3. A

9

maximum exotherm of 143° C occurred 2 minutes later. Cooling reduced the reactor temperature to 130° C. A second portion of RO-60 (288.1 g) was added 15 minutes after the initial RO-60 addition. A final portion of RO-60 (288.1 g) was added 15 minutes later and the 130° C reaction temperature was reachieved 3 minutes later. Thirty minutes after the addition of the final portion of RO-60, ethylene glycol (3.00 moles, 186.18 g) was added to the reactor, the steam condenser was started, nitrogen sparging was increased to 0.75 liter per minute, and the temperature controller was set at 160° C. The 160° C temperature was achieved 28 minutes later. After 2 hours at 160° C, the temperature controller was set at 205° C and this temperature was achieved 26 minutes later. After 8 hours, a total of 100 ml of water layer and 127 ml of organic material were collected in the Dean Stark trap. The reactor was cooled to 165° C and 100 ppm of hydroquinone were added. The modified unsaturated polyester was recovered as a transparent, light yellow-colored solid with a final acid number of 31.7. Essentially all of the esterifiable hydrocarbon reactives and ethylenically unsaturated aromatic hydrocarbons were incorporated into the polyester while the bulk of the nonreactive hydrocarbons were recovered in the Dean Stark trap as determined by mass balance calculations.

A portion of the modified unsaturated polyester (199.5 g) and styrene (150.5 g) were formulated to provide a 57.0, 43.0 percent solution, respectively. The physical and mechanical properties were determined using the method of Example 1. The unnotched Izod impact was determined using the method of Example 3. The results are reported in Table IV.

## TABLE IV

| | |
|---|---|
| Brookfield Viscosity (Pa·s) | 0.260 |
| SPI Gel | |
| Gel Time (min.) | 3.6 |
| Cure Time (min.) | 7.7 |
| Max. Exotherm (°C) | 166 |
| Average Barcol Hardness | 42 |
| Heat Distortion Temp. (°F) | 173 |
| [°C] | [78.3] |
| Tensile Strength x 10 (psi) | 8.870 |
| [kPa x 10] | [61.156] |
| Elongation (%) | 1.75 |
| Flexural Strength x 10 (psi) | 14.075 |
| [kPa x 10] | [97.044] |
| Flexural Modulus x $10^4$ (psi) | 64.6 |
| [kPa x $10^4$] | [445.40] |
| Izod Impact, unnotched (ft.-lbs/in.) | 2.0 |
| [Joules/m] | [106.757] |

## EXAMPLE 5

Maleic anhydride (2.22 moles, 217.91 g) was added to a reactor and heated to 100° C under a nitrogen atmosphere with stirring. Water (2.44 moles, 44.05 g) was added and induced a maximum exotherm of 136° C two minutes later. Cooling reduced the reactor temperature to 130° C after an additional 3 minutes. Fifteen minutes after the initial water addition, partially polymerized RO-60 (128.03 g) was added to the reactor. A maximum exotherm of 144° C occurred 2 minutes later. Cooling reduced the reactor temperature to 130° C. A second portion of RO-60 (128.03 g) was added 15 minutes after the initial RO-60 addition. A final portion of the same RO-60 (128.03 g) was added 15 minutes later and the 130° C reaction temperature was reachieved 2 minutes later. Thirty minutes after the addition of the final portion of RO-60, propylene glycol (1.33 moles, 101.47 g) was added to the reactor, the steam condenser was started, nitrogen sparging was increased to 0.50 liter per minute, and the temperature controller was set at 160°C. The 160°C temperature was achieved 17 minutes later. After 2 hours at 160°C, the temperature controller was set at 205°C and this temperature was achieved 15 minutes later. After 5 hours at the 205°C reaction temperature, the reactor was cooled to 165°C and 100 ppm of hydroquinone were added. The modified unsaturated polyester was recovered as a transparent, light yellow-colored solid with a final acid number of 38.9. Mass balance calculations verified that essentially all of the esterifiable hydrocarbon reactives and ethylenically unsaturated aromatic hydrocarbons were incorporated into the polyester while the bulk of the nonreactive hydrocarbons were recovered in the Dean Stark trap.

The partially polymerized RO-60 used in this example was obtained by treating the RO-60 of Example 3 to 0.1 percent by weight of azobisisobutyronitrile and reacting the mixture for 19.5 hours at 60°C under a nitrogen blanket.

A portion of the modified unsaturated polyester (199.5 g) and styrene (150.5 g) were formulated to provide a 57.0, 43.0 percent solution, respectively. The physical and mechanical properties were determined using the method of Example 1. The unnotched Izod impact was determined using the method of Example 3. The results are reported in Table V.

<u>TABLE V</u>

| | |
|---|---|
| Brookfield Viscosity (Pa·s) | 0.294 |
| SPI Gel | |
| Gel Time (min.) | 4.0 |
| Cure Time (min.) | 8.6 |
| Max. Exotherm (°C) | 164 |
| Average Barcol Hardness | 42 |
| Heat Distortion Temp. (°F) | 184 |
| [°C] | [84] |
| Tensile Strength x 10 (psi) | 7.865 |
| [kPa x 10] | [54.227] |
| Elongation (%) | 1.65 |
| Flexural Strength x 10 (psi) | 14.521 |
| [kPa x 10] | [100.119] |
| Flexural Modulus x $10^4$ (psi) | 60.70 |
| [kPa x $10^4$] | [418.512] |
| Izod Impact, unnotched (ft.-lbs/in.) | 1.9 |
| [Joules/m] | [101.42] |

COMPARATIVE EXAMPLE 1
<u>Dicyclopentadiene Modified Unsaturated Polyester</u>

Maleic anhydride (7.0 moles, 686.42 g) was added to a reactor and heated to a clear, stirred solution maintained at 100°C under a nitrogen atmosphere. Water (7.1 moles, 127.94 g) was added to the reactor. A maximum exotherm of 134°C resulted 2 minutes later, followed by a decrease in the reaction temperature to 121°C fifteen minutes after the initial water addition. At this time, dicyclopentadiene (2.10 moles, 277.64 g) of 97 percent purity was added. A maximum exotherm of 125°C resulted 2 minutes later with a 120°C temperature being reestablished 4 minutes after the initial dicyclopentadiene addition. Fifteen minutes after the initial addition of dicyclopentadiene, a second portion of dicyclopentadiene (2.10 moles, 277.64 g) was added. Fifteen minutes later, a final portion of dicyclopentadiene (2.10 moles, 277.64 g) was added and the temperature controller was maintained at 120°C. This temperature was reestablished 3 minutes later. After 30 minutes, propylene glycol (4.20 moles, 319.62 g) was added to the reactor and the steam condenser

11

was started, nitrogen sparging was increased to 0.5 liter per minute, and the temperature controller was set at 160°C. The 160°C temperature was reached 31 minutes (1860 s) later. After 2 hours at 160°C, the temperature controller was set at 205°C, and this temperature was achieved 32 minutes later. After 6.1 hours, a total of 141.5 ml of water layer and 14 ml of organic material were collected in the Dean Stark trap. The reactor was cooled to 165°C and 100 ppm of hydroquinone were added. The dicyclopentadiene modified unsaturated polyester was recovered as a transparent, light yellow-colored solid with a final acid number of 26.8.

A portion of the dicyclopentadiene modified unsaturated polyester (199.5 g) and styrene (150.5 g) were formulated to provide a 57.0, 43.0 percent solution, respectively. The physical and mechanical properties were determined using the method of Example 1. The unnotched Izod impact was determined using the method of Example 3. The results are reported in Table VI.

## TABLE VI

| | |
|---|---|
| Brookfield Viscosity (Pa·s) | 0.055 |
| SPI Gel | |
| Gel Time (min.) | 3.0 |
| Cure Time (min.) | 5.5 |
| Max. Exotherm (°C) | 226 |
| Average Barcol Hardness | 35 |
| Heat Distortion Temp. (°F) | 238 |
| [°C] | [114.5] |
| Tensile Strength x 10 (psi) | 4.568 |
| [kPa x 10] | [31.495] |
| Elongation (%) | 0.94 |
| Flexural Strength x 10 (psi) | 9.672 |
| [kPa x 10] | [66.686] |
| Flexural Modulus x $10^4$ (psi) | 61.00 |
| [kPa x $10^4$] | [420.590] |
| Izod Impact, unnotched (ft.-lbs/in.) | 1.0 |
| [Joules/m] | [53.37] |

## EXAMPLE 6

The percent volume shrinkage was determined from the densities of the cured resin and the liquid resin of Examples 4 and 5 and Comparative Example 1. For additional comparison, the volume shrinkage was also determined for a styrenated (43 percent) tetrahydrophthalate unsaturated polyester prepared from maleic anhydride (1.80 moles, 176.51 g), tetrahydrophthalic anhydride (1.20 moles, 182.58 g) and propylene glycol (2.20 moles, 167.42 g) (acid number 24.5). The results are reported in Table VII.

TABLE VII

|  | Volume Shrinkage (percent) |
|---|---|
| Example 4 | 7.60 |
| Example 5 | 7.86 |
| Comparative Example 1 (1) | 8.20 |
| Tetrahydrophthalate Unsaturated Polyester Resin (1) | 9.92 |

(1) Not an embodiment of the invention.

EXAMPLE 7

A polymer modified unsaturated polyesteramide resin was prepared in a 100 gallon, 316 stainless steel reactor. The reactor equipped with mechanical stirring, flow meter controlled inlet lines and associated valving for nitrogen, was changed with maleic anhydride, water, RO-60, propylene glycolpiperazine solution and styrene. The respective liquid reactants were metered into the reactor from individual drums using calibrated drum pumps. A scale was used to monitor the weight loss from each drum during pumping. Heating and cooling were provided to the reactor jacket via a recirculating pump for the heat transfer fluid. Heat was provided to the heat transfer fluid reservoir via a pair of thermostated in-line electric heaters. Finned cooling coils with a water curtain provided for rapid cooling when activated. The reactor overhead section was fitted with a manway for charging solid maleic anhydride briquettes or hydroquinone and a steam-jacketed condensor. A chilled, water condensor and knock-out pot fitted with a drain valve were used to recover condensate from the steam-jacketed condensor. Product was recovered from thereactor through a ram valve into a 10 micrometer filter assembly and to a valved drumming outlet.

The RO-60 used was analyzed by capillary gas chromatography and possessed the following composition:

| Esterifiable Hydrocarbon Reactives: | Weight Percent |
|---|---|
| Isoprene-cyclopentadiene codimer | 1.65 |
| Indene | 4.03 |
| Methylcyclopentadiene-cyclopentadiene codimer | 6.17 |
| Butadiene-cyclopentadiene codimer | 5.32 |
| Dicyclopentadiene | 45.89 |
| Cyclopentadiene | 1.56 |
| Sub total | 64.62 |

| Ethylenically Unsaturated Aromatic Hydrocarbons: | |
|---|---|
| Styrene and Vinyl Toluenes | 15.96 |
| Non-Reactive Hydrocarbons: | 19.42 |
| Total | 100.00 |

The following reaction sequence and stoichiometry was used:

| Reaction Step | Cumulative Reaction Time (hrs/min) |
|---|---|
| Water addition (62 lbs (28 kg) @ 1.9 gph)1 started into 100°C stirred solution of maleic anhydride (169 lbs(76.7kg)) under 0.375 scfh[4] nitrogen | 0 |
| First 31 lbs (14 kg) water in, start adding second 31 lbs (14 kg)water | 1/45 |
| All water added, reaction temperature between 90-110°C, start recycle of distilled hydrocarbons and water back into reactor | 1/50 |
| Resin Oil 60 addition (320.1 lbs (145.3 kg) @ 0.66 gpm) started | 2/0 |
| Resin Oil 60 addition completed, temperature controller set at 135°C | 2/55 |
| Hydrolysis reaction completed, [acid number], recycle of distilled hydrocarbons and water stopped | 4/55 [218] |
| Piperazine-ethylene glycol solution (66.7 lbs (30.3kg)) added, temperature controller set at 160°C, nitrogen sparge set to 7.5 scfh[4], 2,5-di-tert-butyl hydroquinone (12.6 grams) added as process inhibitor | 5/50 |
| Reaction at 160°C completed, temperature controller set at 205°C [acid number] | 7/50 [120] |
| 205°C reached | 10/0 |
| Nitrogen sparge set at 2.75 scfm[5] | 11/40 |
| Reaction at 205°C completed, cooling started, turn nitrogen sparge down to 0.375 scfh[4] | 15/30 |

| Reaction Step | Cumulative Reaction Time (hrs/min) |
|---|---|
| Hydroquinone (58.9 grams) added at 150°C, [acid number] | 16/40 [27] |
| 2% O in N started at 125°C | 17/15 |
| Styrene (372.4 lbs (169 kg)) added at 110°C | 18/0 |
| Styrenated product drummed | 19/30 |
| Volume water layer recovered = | 28,700 mls. |
| Volume hydrocarbon layer recovered = | 45,750 mls. |
| Total | 74,450 mls |

NOTES:

[1]The second 31 lbs water was dumped in through the reactor sample valve (not added @ 1.9 gph).
[2]The solution contained 13.37 weight percent piperazine and 86.63 weight percent ethylene glycol.
[3]Contained 43 percent by weight styrene.
[4]Scfh (standard cubic feed per hour ) x 7.9 x $10^{-6}$ = $m^3/s$
[5]Scfm (standard cubic feed per minute) x 4.7 x $10^{-4}$ = $m^3/s$

The physical and mechanical properties were determined using the method of Example 1. The results are reported in Table VIII.

## TABLE VIII

| | |
|---|---|
| Brookfield Viscosity (Pa·s) | 0.053 |
| SPI Gel | |
| Gel Time (min.) | 4.2 |
| Cure Time (min.) | 7.9 |
| Max. Exotherm (°C) | 190 |
| Average Barcol Hardness | 41 |
| Heat Distortion Temp. (°F) | 199 |
| [°C] | [92.8] |
| Tensile Strength x 10 (psi) | 9.157 |
| [kPa x 10] | [63.135] |
| Elongation (%) | 2.02 |
| Flexural Strength x 10 (psi) | 13.638 |
| [kPa x 10] | [94.031] |
| Flexural Modulus x $10^4$ (psi) | 59.80 |
| [kPa x $10^4$] | [412.306] |

EXAMPLE 8

16

A polymer modified unsaturated polyesteramide resin was prepared using the method of Example 7. The following reaction sequence and stoichiometry was used:

| Reaction Step | Cumulative Reaction Time (hrs/min) |
|---|---|
| Water addition (36.2 lbs (16.4 kg) @ 1.1 gph) started into 100°C stirred solution of maleic anhydride (95.8 lbs(43.5kg)) under 0.375 scfh$^3$ nitrogen | 0 |
| First 17.6 lbs (7.9 kg) water in, start adding second 18.6 lbs (8.4 kg) water | 2/5 |
| All water added, reaction temperature between 90-110°C, start recycle of distilled hydrocarbons and water back into reactor | 2/12 |
| Resin Oil 60 addition (181.4 lbs (82.3 kg) @ 0.37 gpm) started | 2/15 |
| Resin Oil 60 addition completed, temperature controller set at 135°C | 3/0 |
| Hydrolysis reaction completed, reaction temperature - 120°C, [acid number], of distilled hydrocarbons and water stopped | 6/40 [224] |
| Piperazine-glycerine polypropoxylate-ethylene glycol solution (67.6 lbs (30.7 kg))[1] added, temperature controller set at 160°C, nitrogen sparge set to 7.5 scfh$^3$, 2,5-di-tert-butyl hydroquinone (12.6 grams) added as process inhibitor | 6/45 |
| Reaction at 160°C completed, temperature controller set at 205°C [acid number] | 8/0 [131] |
| 205°C reached | 10/0 |
| Nitrogen sparge set at 2.75 scfm[4] | 11/34 |
| Reaction at 205°C completed, cooling started, turn nitrogen sparge down to 0.375 scfh$^3$ | 14/35 |

| Reaction Step | Cumulative Reaction Time (hrs/min) |
|---|---|
| Hydroquinone (58.9 grams) added at 150°C, [acid number] | 16/55 [23.8] |
| 2% $O_2$ in $N_2$ started at 125°C | 17/40 |
| Styrene (233.3 lbs (106 kg)) added at 110°C | 18/35 |
| Styrenated product drummed[2] | 20/25 |
| Volume water layer recovered = | 16,750 mls. |
| Volume hydrocarbon layer recovered = | 24,750 mls. |
| Total | 41,500 mls |

NOTES:

[1] The glycerine polypropoxylate used was a reaction product of glycerine and propylene oxide in a 1 to 9 mole ratio (available from The Dow Chemical Company as Voranol * 2070). The hydroxyl equivalent weight was 689.75. The solution contained 7.48 weight percent piperazine, 41.62 weight percent ethylene glycol and 50.90 weight percent glycerine polypropoxylate.

[2] Contained 43 percent by weight styrene.

[3] Scfh (standard cubic feet per hour) x $7.9 \times 10^{-6}$ = $m^3/s$

[4] Scfm (standard cubic feet per minute) x $4.7 \times 10^{-4}$ = $m^3/S$

The physical and mechanical properties were determined using the method of Example 1. The results are reported in Table IX.

*Trademark of The Dow Chemical Co.

## TABLE IX

| | |
|---|---|
| Brookfield Viscosity (Pa·s) | 0.147 |
| SPI Gel | |
| Gel Time (min.) | 3.6 |
| Cure Time (min.) | 7.0 |
| Max. Exotherm ($^\circ$C) | 189 |
| Average Barcol Hardness | 36 |
| Heat Distortion Temp. ($^\circ$F) | 176 |
| [$^\circ$C] | [80] |
| Tensile Strength x 10 (psi) | 9.436 |
| [kPa x 10] | [65.059] |
| Elongation (%) | 2.41 |
| Flexural Strength x 10 (psi) | 15.244 |
| [kPa x 10] | [105.104] |
| Flexural Modulus x $10^4$ (psi) | 56.30 |
| [kPa x 10$^4$] | [388.175] |

### Example 9

Maleic anhydride (5.00 moles, 490.3 g) was added to a reactor and heated to 100$^\circ$C under a nitrogen atmosphere with stirring. Water (5.50 moles, 99.11 g) was added and induced a maximum exotherm of 135$^\circ$C two minutes later. Cooling reduced the reactor temperature to 125$^\circ$C after an additional 5 minutes. Fifteen minutes after the initial water addition, a commercial grade (Dow Chemical Co.) of resin oil designated as RO-60 (326.57 g) was added to the reactor. Capillary gas chromatographic-mass spectroscopic analysis of the RO-60 demonstrated the following composition: 63.41 weight percent esterifiable hydrocarbon reactives composed of cyclopentadiene (5.02 percent), butadiene/cyclopentadiene codimers (3.74 percent), dicyclopentadiene (50.51 percent), indene (3.25 percent), and methylcyclopentadiene/cyclopentadiene codimer (5.91 percent); 12.92 weight percent ethylenically unsaturated aromatic hydrocarbon reactives composed of styrene (11.48 percent) and vinyl toluene (1.44 percent); and 23.67 weight percent nonreactive hydrocarbons composed of ethylbenzenes (0.13 percent), xylenes (1.52 percent) naphthalene (0.18 percent), trimethylbenzenes, di- and trimethylbenzenes, methylethyl benzenes, and the like. A maximum exotherm of 139$^\circ$C occurred 3 minutes later. Cooling reduced the reactor temperature to 125$^\circ$C. A second portion of RO-60 (326.57 g) was added 15 minutes after the initial RO-60 addition. A final portion of RO-60 (326.57 g) was added 15 minutes later and the 125$^\circ$C reaction temperature was reachieved 4 minutes later. Thirty minutes after the addition of the final portion of RO-60, ethylene glycol (2.70 moles, 167.56 g) and piperazine (0.30 mole, 25.84 g) were added to the reactor, the steam condenser was started, nitrogen sparging was increased to 0.75 liter per minute and the temperature controller was set at 160$^\circ$C. The 160$^\circ$C temperature was achieved 22 minutes later. After 2 hours at 160$^\circ$C, the temperature controller was set at 205$^\circ$C and this temperature was achieved 26 minutes later. After 10 hours, a total of 100 ml of water layer and 169 ml of organic material were collected in the Dean Stark trap. The reactor was cooled to 165$^\circ$C and 100 ppm of hydroquinone was added. The modified unsaturated polyesteramide was recovered as a transparent, light yellow-colored solid with a final acid number of 18.5.

### Example 10

Compressive strength test pieces were prepared using a modification of standard method (ASTM C-882) wherein a polymer concrete formulation was poured onto a concrete cylinder with a 30$^\circ$ angle face. Each concrete cylinder was contained in a plastic cylindrical mold. A portion (171 g) of the polymer modified unsaturated polyesteramide of Example 9 was blended with styrene (129 g) to provide a 43 percent styrenated solution. A portion (277 g) of the styrenated resin solution was catalyzed using 0.30 percent by weight dimethylaniline and 1.00 percent by weight benzoyl peroxide, then 1108 g of a 50/50 volume percent mixture of number 3 and number 4 blasting sand was stirred into the solution. The resulting polymer concrete was split to two equivalent portions which were used to prepare duplicate compressive strength test pieces. A tamping rod and vibrator were used to pack the cylindrical molds with the polymer concrete and assist in removal of bubbles before gelation. After post-curing for three days atroom temperature (25°C), the 3-inch by 6-inch (7.6 cm by 15.2 cm) cylindrical compressive strength test pieces were demolded and tested by loading along their longitudinal axes at a loading rate of 18,000 psi per minute (124 MPa per minute) until failure occurred. The ultimate load was divided by the cross-sectional area to determine the compressive strength of each sample. The average of the duplicate compressive strength values is given in Table I and designated as dry.

EXAMPLE 11

The method of Example 10, was repeated except that each concrete cylinder contained in a plastic cylindrical mold was immersed under water for 3 hours. The water was then poured off each cylinder 5 minutes prior to adding the polymer concrete. The average of the duplicate compressive strength values is given in Table X and designated as wet.

## Table X

### Compressive Strength (psi)

| Example 1 | |
|---|---|
| Dry | 5315 |
| [kPa x 10³] | [36.646] |

| Example 2 | |
|---|---|
| Wet | 3045 |
| [kPa x 10³] | [20.995] |

COMPARATIVE EXAMPLE 2

A. Dicyclopentadiene Modified Unsaturated Polyester

Maleic anhydride (686.42 g, 7.00 moles) was added to a reactor and heated to a clear, stirred solution maintained at 100°C under a nitrogen atmosphere. Water (127.94 g, 7.10 moles) was added inducing a maximum exotherm of 134°C two minutes later. The reactor was air-cooled to 121°C and 15 minutes after the initial water addition, dicyclopentadiene (277.64 g, 2.10 moles) was added. A maximum exotherm of 125°C resulted 2 minutes later and after an additional 3 minutes, air cooling reduced the reaction temperature to 120°C. Fifteen minutes after the initial dicyclopentadiene addition, a second portion of dicyclopentadiene (277.64 g, 2.10 moles) was added. A maximum exotherm of 129°C resulted 3 minutes later and after an additional 3 minutes, air cooling reduced the reaction temperature to 120°C. A final portion of dicyclopentadiene (277.64 g, 2.10 moles) was added 15 minutes after the second dicyclopentadiene addition and the 120°C reaction temperature was re-achieved 3 minutes later. Thirty minutes later, propylene glycol (319.62 g, 4.20 moles) was added, nitrogen sparging was increased to 0.75 liter per minute, the steam condenser was started, and the temperature controller was set at 160°C. This temperature was achieved 34 minutes later. After 2 hours, the temperature controller was set at 205°C and this temperature was achieved 29 minutes later. After 14 hours, 156 milliliters of water layer and 18 milliliters of organic material were recovered into the Dean Stark trap. The reactor was cooled to 165°C and 100 ppm of hydroquinone were added. The dicyclopentadiene modified unsaturated polyester was recovered as a transparent, light-yellow colored solid with a final acid number of 19.6.

B. Preparation of Polymer Concrete and Evaluation of Compressive Bond Strength

The methods of Examples 10 and 11 were repeated using polymer concrete prepared from a 43 percent sytrenated solution of the dicyclopentadiene modified unsaturated polyester. The average of the compressive strength values is given in Table XI and designated as dry or wet, respectively.

Table XI

| Comparative Example 2 | Compressive Strength (psi) |
|---|---|
| Dry [kPa x 10³] | 3040 [20.96] |
| Wet [kPa x 10³] | 2155 [14.858] |

COMPARATIVE EXAMPLE 3

A. Dicyclopentadiene Modified Unsaturated Polyesteramide

A dicyclopentadiene modified unsaturated polyesteramide was prepared using the method of Comparative Example 2 except that the propylene glycol (319.62 g, 4.20 moles) was replaced with propylene glycol (287.66 g, 3.78 moles) plus piperazine (36.18 g, 0.420 mole). The dicyclopentadiene modified unsaturated polyesteramide was recovered as a transparent light-yellow solid with a final acid number 18.9.

B. Preparation of Polymer Concrete and Evaluation of Compressive Bond Strength

The methods of Examples 10 and 11 were repeated using polymer concrete prepared from a 43 percent styrenated solution of the dicyclopentadiene modified unsaturated polyesteramide. The average of the compressive strength values is given in Table XII and designated as dry or wet, respectively.

Table XII

| Comparative Example 3 | Compressive Strength (psi) |
|---|---|
| Dry [kPa x 10³] | 4290 [29.579] |
| Wet [kPa x 10³] | 2160 [14.893] |

COMPARATIVE EXAMPLE 4

A. Orthophthalic Unsaturated Polyester

Maleic anhydride (411.85 g, 4.20 moles) and phthalic anhydride (414.71 g, 2.80 moles) were added to a reactor and heated to a white-colored stirred slurry maintained at 100°C under a nitrogen atmosphere. Propylene glycol (585.97 g, 7.70 moles) was added and a maximum exotherm of 153°C resulted 17 minutes later. At that time, nitrogen sparging was increased to 0.75 liter per minute, the steam condenser was started, and the temperature controller was set at 160°C. That temperature was achieved 5 minutes later. After 2 hours at 160°C reactive temperature, the temperature controller was set at 205°C and that temperature was achieved 58 minutes later. After 10.0 hours at the 205°C reaction temperature, a total of 128 milliliters of water layer was recovered into the Dean Stark trap. The reactor was cooled to 160°C and 100 ppm of hydroquinone was added. The unsaturated polyester was recovered as a clear, transparent solid with a final acid number of 26.4.

B. Preparation of Polymer Concrete and Evaluation of Compressive Bond Strength

The methods of Examples 10 and 11 were repeated using polymer concrete prepared from a 43 percent styrenated solution of the orthophthalic unsaturatedpolyester. The average of the compressive strength values is given in Table XIII and designated as dry or wet, respectively.

Table XIII

| | Compressive Strength (psi) |
|---|---|
| Comparative Example 4 | |
| Dry<br>[kPa x $10^3$]<br>Wet<br>[kPa x $10^3$] | 3900<br>[26.89]<br>1625<br>[11.204] |

EXAMPLE 5

Tensile strength test pieces were prepared using a standard method (ASTM C-307). A portion (85.5 g) of the polymer modified unsaturated polyesteramide of Example 9, the dicyclopentadiene modified unsaturated polyester of Comparative Example 2, the dicyclopentadiene modified unsaturated polyesteramide of Comparative Example 3, and the orthophthalic unsaturated polyester of Comparative Example 4, respectively, were blended with styrene (64.5 g) to provide 43 percent styrenated solutions. A portion (100 g) of each respective resin solution was catalyzed using 0.30 percent by weight dimethylaniline and 1.00 percent by weight benzoyl peroxide, then 400 g of a 50/50 volume percent mixture of number 3 and number 4 blasting sand was stirred into the solution. The resulting polymer concrete was split into two equivalent portions which were used to prepare duplicate tensile strength test pieces. A tamping rod was used to pack brass two-piece molds which had been coated with a wax release agent. After post-curing for 3 days at room temperature (25° C), the test pieces were demolded and tested on an Instron machine at a crosshead speed of 0.2 inch per minute (0.51 cm per minute) until failure occurred. The average of the duplicate tensile strength values is given in Table XIV.

TABLE XIV

| | Tensile Strength (psi) [kPa x $10^3$] | |
|---|---|---|
| Example 9 | 1573 | [10.846] |
| Comp. Ex. 2 (1) | 1220 | [8.412] |
| Comp. Ex. 3 (1) | 1150 | [7.929] |
| Comp. Ex. 4 (1) | 1390 | [9.584] |

(1) Not an embodiment of the invention.

**Claims**

**Claims for the following Contracting States : BE, CH, DE, FR, GB, IT, LI, NL, SE**

1. A polymer modified unsaturated polyester or polyesteramide resin prepared by reacting under polymerization conditions
   (A) one or more alpha, beta ethylenically unsaturated polycarboxylic acids, anhydrides, or mixtures thereof with or without one or more saturated or aromatic polycarboxylic acids or anhydrides thereof
   (B) water,
   (C) one or more polyols or a mixture of polyols and polyamines,
   (D) (1) an esterifiable hydrocarbon, and,

(D) (2) an ethylenically unsaturated aromatic hydrocarbon with or without polymerized derivatives thereof.

2. A process for preparing a polymer modified unsaturated polyester or polyester-amide resin as claimed in Claim 1, which process comprises combining under polymerisation reaction conditions
(A) one or more alpha, beta ethylenically unsaturated polycarboxylic acids, anhydrides, or mixtures thereof with or without one or more saturated or aromatic polycarboxylic acids or anhydrides thereof
(B) an effective amount of water,
(C) one or more polyols or a mixture of polyols and polyamines and
(D) a hydrocarbon mixture comprising
(1) esterifiable hydrocarbons,
(2) ethylenically unsaturated aromatic hydrocarbons with or without polymerized derivatives thereof, and, optionally,
(3) non-reactive hydrocarbons.

3. A process as claimed in Claim 2, wherein water is used in an amount from 1.1 to 2.0 moles per mole of unsaturated polycarboxylic acid or anhydride.

4. A process as claimed in Claim 2 or Claim 3, wherein the said hydrocarbon mixture comprises 25 to 95 parts by weight of esterifiable hydrocarbons, 5 to 50 parts by weight if ethylenically unsaturated aromatic hydrocarbons with or without polymerized derivatives thereof, and the remainder non-reactive hydrocarbons.

5. A process as claimed in any one of Claims 2 to 4, wherein said hydrocarbon mixture is used in an amount to provide from 0.25 to 1.0 moles of esterifiable hydrocarbons per mole of unsaturated polycarboxylic acid or anhydride.

6. A curable resinous composition comprising a polymer modified unsaturated polyester or polyesteramide resin as claimed in Claim 1, or produced by a method as claimed in any one of Claims 2 to 5, and one or more ethylenically unsaturated monomers.

7. A curable polymer concrete composition comprising
(A) about 2 to about 20 percent by weight of a polymer modified unsaturated polyester or polyesteramide resin as claimed in Claim 1, or produced by a method as claimed in any one of Claims 2 to 5, and
(B) about 98 to about 80 percent by weight of an aggregate.

8. The composition of Claim 7, wherein said aggregate comprises sand, gravel, crushed stone or rock, silica flour, fly ash or a mixture of two or more thereof.

9. The composition of Claim 8, wherein the aggregate additionally contains up to about 50 percent by weight of metal fines, glass fibers, synthetic fibers, glass reinforcing mats, glass strands, glass filaments, metal turnings, metal fibers, mineral powders or a mixture of two or more thereof.

10. A cured composition obtained by curing a composition as claimed in any one of Claims 6 to 9.

**Claims for the following Contracting State : ES**

1. A process for the preparation of a polymer modified unsaturated polyester or polyesteramide resin which comprises combining under polymerization reaction conditions
(A) one or more alpha, beta ethylenically unsaturated polycarboxylic acids,. anhydrides, or mixtures thereof with or without one or more saturated or aromatic polycarboxylic acids or anhydrides thereof
(B) water,
(C) one or more polyols or a mixture of polyols and polyamines and
(D) a hydrocarbon mixture comprising
(1) an esterifiable hydrocarbon,
(2) an ethylenically unsaturated aromatic hydrocarbon with or without polymerized derivatives thereof and, optionally,

(3) non-reactive hydrocarbons.

2. A process as claimed in Claim 1, wherein water is used in an amount from 1.1 to 2.0 moles per mole of unsaturated polycarboxylic acid or anhydride.

3. A process as claimed in Claim 1 or Claim 2, wherein the said hydrocarbon mixture comprises 25 to 95 parts by weight of esterifiable hydrocarbons, 5 to 50 parts by weight if ethylenically unsaturated aromatic hydrocarbons with or without polymerized derivatives thereof, and the remainder non-reactive hydrocarbons.

4. A process as claimed in any one of the preceding claims, wherein said hydrocarbon mixture is used in an amount to provide from 0.25 to 1.0 moles of esterifiable hydrocarbons per mole of unsaturated polycarboxylic acid or anhydride.

5. A process for the preparation of cured resinous composition comprising the steps of
   (a) blending a curing catalyst, the polyester or polyesteramide resin of any of Claims 1 to 4 and one or more ethylenically unsaturated monomer, and
   (b) curing said resinous composition.

6. A process for the preparation of a polymer concrete which comprises the steps of
   (a) mixing a curing catalyst with 2 to 20 percent by weight of a polymer modified unsaturated polyester or polyesteramide resin of any of Claims 1 to 4 dissolved in one or more ethylenically unsaturated monomers,
   (b) mixing the catalyzed resin with 98 to 80 percent by weight of an aggregate to provide a curable polymer concrete blend, and
   (c) curing said concrete blend.

7. A process as claimed in Claim 6, wherein said aggregate comprises sand, gravel, crushed stone or rock, silica flour, fly ash or a mixture of two or more thereof.

8. A process as claimed in Claim 7, wherein the aggregate additionally contains up to 50 percent by weight of metal fines, glass fibers, synthetic fibers, glass reinforcing mats, glass strands, glass filaments, metal turnings, metal fibers, mineral powders or a mixture of two or more thereof.

9. A process as claimed in any one of the preceding claims, wherein the polyester or polyesteramide resin is dissolved in one or more vinyl monomers.

10. A process as claimed in Claim 9, wherein the vinyl monomer is styrene.

**Revendications**

**Revendications pour les Etats contractants suivants : BE, CH, DE, FR, GB, IT, LI, NL, SE**

1. Résine de polyester ou polyesteramide insaturé modifiée par un polymère, préparée par réaction, dans des conditions de polymérisation, de:
   (A) un ou plusieurs acides ou anhydrides d'acides polycarboxyliques à insaturation alpha,béta-éthylénique, ou leurs mélanges, avec ou sans un ou plusieurs acides ou anhydrides d'acides polycarboxyliques saturés ou aromatiques,
   (B) eau,
   (C) un ou plusieurs polyols ou un mélange de polyols et de polyamines,
   (D) (1) un hydrocarbure estérifiable, et
   (D) (2) un hydrocarbure aromatique à insaturation éthylénique avec ou sans dérivés polymérisés de celui-ci.

2. Procédé de préparation d'une résine de polyester ou polyesteramide insaturé, modifié par un polymère, tel que défini dans la revendication 1, comprenant la combinaison, dans des conditions réactionnelles de polymérisation, de:
   (A) un ou plusieurs acides ou anhydrides d'acides polycarboxyliques à insaturation alpha,béta-éthylénique, ou leurs mélanges, avec ou sans un ou plusieurs acides ou anhydrides d'acides polycarboxyliques saturés ou aromatiques,

(B) une proportion efficace d'eau,

(C) un ou plusieurs polyols ou un mélange de polyols et de polyamines, et

(D) un mélange d'hydrocarbures comprenant

(1) des hydrocarbures estérifiables,

(2) des hydrocarbures aromatiques à insaturation éthylénique, avec ou sans dérivés polymérisés de ceux-ci, et, éventuellement,

(3) des hydrocarbures non réactifs.

3. Procédé tel que revendiqué dans la revendication 2, dans lequel l'eau est mise en oeuvre à raison de 1,1 à 2,0 moles par mole d'acide ou d'anhydride d'acide polycarboxylique insaturé.

4. Procédé tel que revendiqué dans l'une des revendications 2 ou 3, dans lequel ledit mélange d'hydrocarbures comprend de 25 à 95 parties en poids d'hydrocarbures estérifiables, de 5 à 50 parties en poids d'hydrocarbures aromatiques à insaturation éthylénique, avec ou sans dérivés polymérisés de ceux-ci, le reste étant constitué par des hydrocarbures non réactifs.

5. Procédé tel que revendiqué dans l'une quelconque des revendications 2 à 4, dans lequel ledit mélange d'hydrocarbures est mis en oeuvre en une quantité fournissant de 0,25 à 1,0 mole d'hydrocarbures estérifiables, par mole d'acide ou d'anhydride polycarboxylique insaturé.

6. Composition résineuse durcissable comprenant une résine de polyester ou polyesteramide insaturé, modifiée par un polymère, telle que revendiquée dans la revendication 1 ou produite par un procédé tel que revendiqué dans l'une quelconque des revendications 2 à 5, et un ou plusieurs monomères à insaturation éthylénique.

7. Composition de béton en polymère durcissable comprenant

(A) d'environ 2 à environ 20 % en poids d'une résine de polyester ou polyesteramide insaturé, modifiée par un polymère, telle que revendiquée dans la revendication 1 ou produite par un procédé tel que revendiqué dans l'une quelconque des revendications 2 à 5, et

(B) d'environ 98 à environ 80 % en poids d'un agrégat.

8. Composition de la revendication 7, dans laquelle ledit agrégat comprend du sable, du gravier, de la pierre ou de la roche broyée, de la farine de silice, des cendres volantes ou un mélange de deux ou plus de ces matériaux.

9. Composition de la revendication 8, dans laquelle ledit agrégat renferme en outre jusqu'à environ 50 % en poids de fines métalliques, de fibres de verre, de fibres synthétiques, de mats de renforcement de verre, de brins de verre, de filaments de verre, de tournure métallique, de fibres de métal, de poudres minérales ou d'un mélange de deux ou plus de ces matériaux.

10. Composition durcie obtenue par durcissement d'une composition telle que revendiquée dans l'une quelconque des revendications 6 à 9.

**Revendications pour l'Etat contractant suivant : ES**

1. Procédé de préparation d'une résine de polyester ou polyesteramide insaturé, modifiée par un polymère, comprenant la combinaison, dans des conditions réactionnelles de polymérisation, de:

(A) un ou plusieurs acides ou anhydrides d'acides polycarboxyliques à insaturation alpha,béta-éthylénique, ou leurs mélanges, avec ou sans un ou plusieurs acides ou anhydrides d'acides polycarboxyliques saturés ou aromatiques,

(B) eau,

(C) un ou plusieurs polyols ou un mélange de polyols et de polyamines, et

(D) un mélange d'hydrocarbures comprenant

(1) un hydrocarbure estérifiable,

(2) un hydrocarbure aromatique à insaturation éthylénique, avec ou sans dérivés polymérisés de celui-ci, et, éventuellement,

(3) des hydrocarbures non réactifs.

2. Procédé tel que revendiqué dans la revendication 1, dans lequel l'eau est mise en oeuvre à raison de 1,1 à 2,0 moles par mole d'acide ou d'anhydride d'acide polycarboxylique insaturé.

3. Procédé tel que revendiqué dans l'une des revendications 1 ou 2, dans lequel ledit mélange d'hydrocarbures comprend de 25 à 95 parties en poids d'hydrocarbures estérifiables, de 5 à 50 parties en poids d'hydrocarbures aromatiques à insaturation éthylénique, avec ou sans dérivés polymérisés de ceux-ci, le reste étant constitué par des hydrocarbures non réactifs.

4. Procédé tel que revendiqué dans l'une quelconque des revendications précédentes, dans lequel ledit mélange d'hydrocarbures est mis en oeuvre en une quantité fournissant de 0,25 à 1,0 mole d'hydrocarbures estérifiables, par mole d'acide ou d'anhydride d'acide polycarboxylique insaturé.

5. Procédé pour la préparation d'une composition résineuse durcie, comprenant les étapes suivantes:
   (a) mélange d'un catalyseur de durcissement, d'une résine de polyester ou polyesteramide de l'une quelconque des revendications 1 à 4, et de un ou plusieurs monomère(s) à insaturation éthylénique, et
   (b) durcissement de ladite composition résineuse.

6. Procédé pour la préparation d'un béton en polymère, qui comprend les étapes suivantes:
   (a) mélange d'un catalyseur de durcissement avec 2 à 20 % en poids d'une résine de polyester ou polyesteramide insaturé, modifiée par un polymère, de l'une quelconque des revendications 1 à 4, dissoute dans un ou plusieurs monomère(s) à insaturation éthylénique,
   (b) mélange de la résine contenant le catalyseur avec de 98 à 80 % en poids d'un agrégat, pour fournir un mélange durcissable de béton en polymère, et
   (c) durcissement de ladite composition de béton.

7. Procédé tel que revendiqué dans la revendication 6, dans lequel ledit agrégat comprend du sable, du gravier, de la pierre ou de la roche broyée, de la farine de silice, des cendres volantes ou un mélange de deux ou plus de ces matériaux.

8. Procédé tel que revendiqué dans la revendication 7, dans lequel ledit agrégat renferme en outre jusqu'à 50 % en poids de fines métalliques, de fibres de verre, de fibres synthétiques, de mats de renforcement de verre, de brins de verre, de filaments de verre, de tournure métallique, de fibres de métal, de poudres minérales ou d'un mélange de deux ou plus de ces matériaux.

9. Procédé tel que revendiqué dans l'une quelconque des revendications précédentes, dans lequel la résine de polyester ou de polyesteramide est dissoute dans un ou plusieurs monomère(s) vinyliques(s).

10. Procédé tel que revendiqué dans la revendication 9, dans lequel le monomère vinylique est le styrène.

**Patentansprüche**
**Patentansprüche für folgende Vertragsstaaten : BE, CH, DE, FR, GB, IT, LI, NL, SE**

1. Polymermodifiziertes Polyester- oder Polyesteramidharz, hergestellt durch Reaktion unter Polymerisationsbedingungen

   (A) einer oder mehrerer alpha, beta-ethylenartig ungesättigten Polycarbonsäuren, -anhydride oder Mischungen hiervon mit oder ohne einer oder mehreren gesättigten oder aromatischen Polycarbonsäuren oder Anhydriden hiervon,
   (B) Wasser,
   (C) einem oder mehreren Polyolen oder einer Mischung von Polyolen und Polyaminen und
   (D) (1) einem veresterbaren Kohlenwasserstoff, und
   (D) (2) einem ethylenartig ungesättigten, aromatischen Kohlenwasserstoff mit oder ohne polymerisierten Derivaten hiervon.

2. Verfahren zur Herstellung eines polymermodifizierten ungesättigten Polyesters oder Polyesteramids nach Anspruch 1, wobei das Verfahren die Kombination unter Polymerisationsreaktionsbedinungen umfaßt von

(A) einer oder mehreren alpha, beta-ethylenartig ungesättigten Polycarbonsäuren, -anhydriden oder Mischungen hiervon mit oder ohne einer oder mehreren gesättigten aromatischen Polycarbonsäuren oder Anhydriden hiervon,

(B) Wasser,

(C) einem oder mehreren Polyolen oder einer Mischung von Polyolen und Polyaminen, und

(D) einer Kohlenwasserstoffmischung, umfassend:

(1) veresterbare Kohlenwasserstoffe,

(2) ethylenartig ungesättigte aromatische Kohlenwasserstoffe mit oder ohne polymerisierten Derivaten hiervon, und, wahlweise,

(3) nicht-reaktiven Kohlenwasserstoffen.

3. Verfahren nach Anspruch 2, worin Wasser in einer Menge von 1,1 bis 2,0 mol pro mol an ungesättigter Polycarbonsäure oder -anhydrid verwendet wird.

4. Verfahren nach Anspruch 2 oder 3, worin diese Kohlenwasserstoffmischung 25 bis 95 Gew.-Teile an veresterbaren Kohlenwasserstoffen, 5 bis 50 Gew.-Teile an ethylenartig ungesättigten aromatischen Kohlenwasserstoffen mit oder ohne polymerisierten Derivaten hiervon und als Rest nicht-reaktive Kohlenwasserstoffe umfaßt.

5. Verfahren nach einem der Ansprüche 2 bis 4, worin diese Kohlenwasserstoffmischung in einer Menge eingesetzt wird, um von 0,25 bis 1,0 mol an veresterbaren Kohlenwasserstoffen pro mol an ungesättigter Polycarbonsäure oder -anhydrid bereitzustellen.

6. Aushärtbare Harzmasse, umfassend ein polymermodifiziertes ungesättigtes Polyester- oder Polyesteramidharz nach Anspruch 1 oder hergestellt nach einem Verfahren der Ansprüche 2 bis 5, und ein oder mehrere ethylenartig ungesättigte Monomere.

7. Aushärtbare Polymerbetonzusammensetzung, umfassend

(A) etwa 2 bis etwa 20 Gew.-% eines polymermodifizierten ungesättigten Polyester- oder Polyesteramidharzes nach Anspruch 1 oder hergestellt nach einem Verfahren eines der Ansprüche 2 bis 5, und

(B) etwa 98 bis etwa 80 Gew.-% eines Zuschlages.

8. Zusammensetzung nach Anspruch 7, worin der Zuschlag umfaßt: Sand, Kiesel, zerkleinerte Steine oder Felsen, Kieselerdemehl, Flugasche oder eine Mischung von zwei oder mehreren hiervon.

9. Zusammensetzung nach Anspruch 8, worin der Zuschlag zusätzlich bis zu 50 Gew.-% an Metallstäuben, Glasfasern, synthetischen Fasern, Glasverstärkungsmatten, Glassträngen, Glasfäden, Metalldrehspänen, Metallfasern, Mineralpulvern oder eine Mischung von zwei oder mehreren hiervon enthält.

10. Ausgehärtete Zusammensetzung, erhalten durch Aushärten einer Zusammensetzung nach einem der Ansprüche 6 bis 9.

**Patentansprüche für folgenden Vertragsstaat : ES**

1. Verfahren zur Herstellung eines polymermodifizierten ungesättigten Polyester- oder Polyesteramidharzes, welches umfaßt die Kombination unter Polymerisationsreaktionsbedingungen:

(A) einer oder mehrerer alpha, beta-ethylenartig ungesättigter Polycarbonsäuren, -anhydride oder Mischungen hiervon mit oder ohne einer oder mehreren gesättigten oder aromatischen Polycarbonsäuren oder Anhydriden hiervon

(B) Wasser,

(C) einem oder mehreren Polyolen oder einer Mischung von Polyolen und Polyaminen, und

(D) einer Kohlenwasserstoffmischung, umfassend

(1) einen veresterbaren Kohlenwasserstoff,

(2) einen ethylenartig ungesättigten aromatischen Kohlenwasserstoff mit oder ohne polymerisierte Derivate hiervon, und wahlweise

(3) nicht-reaktiven Kohlenwasserstoffen.

2. Verfahren nach Anspruch 1, worin Wasser in einer Menge von 1,1 bis 2,0 mol pro mol an ungesättigter Polycarbonsäure oder -anhydrid verwendet wird.

3. Verfahren nach Anspruch 1 oder 2, worin diese Kohlenwasserstoffmischung 25 bis 95 Gew.-Teile an veresterbaren Kohlenwasserstoffen, 5 bis 50 Gew.-Teile an ethylenartig ungesättigten aromatischen Kohlenwasserstoffen mit oder ohne polymerisierte Derivate hiervon und als Rest nicht-reaktive Kohlenwasserstoffe umfaßt.

4. Verfahren nach einem der vorhergehenden Ansprüche, worin diese Kohlenwasserstoffmischung in einer Menge eingesetzt wird, um von 0,25 bis 1,0 mol an veresterbaren Kohlenwasserstoffen pro mol an ungesättigter Polycarbonsäure oder -anhydrid bereitzustellen.

5. Verfahren zur Herstellung einer ausgehärteten Harzmassse, umfassend die Stufen von
(a) Zusammenmischen eines Aushärtkatalysators, des Polyester- oder Polyesteramidharzes von einem der Ansprüche 1 bis 4 und einem oder mehreren ungesättigten Monomeren, und
(b) Aushärten dieser Harzmasse.

6. Verfahren zur Herstellung eines Polymer-Betons, welches die Stufen umfaßt von
(a) Mischen eines Aushärtkatalysators mit 2 bis 20 Gew.-% eines polymermodifizierten ungesättigten Polester- oder Polyesteramidharzes eines der Ansprüche 1 bis 4, aufgelöst in einem oder mehreren ungesättigten Monomeren,
(b) Mischen des mit Katalysator versetzten Harzes mit 98 bis 80 Gew.-% eines Zuschlages zur Bereitstellung einer aushärtbaren Polymer-Beton-Mischung, und
(c) Aushärten dieser Beton-Mischung.

7. Verfahren nach Anspruch 6, worin dieser Zuschlag umfaßt Sand, Kiesel, zerkleinerte Steine oder Felsen, Kieselmehl, Flugasche oder eine Mischung von zwei oder mehreren hiervon.

8. Verfahren nach Anspruch 7, worin der Zuschlag zusätzlich bis zu 50 Gew.-% an Metallspänen, Glasfasern, synthetischen Fasern, Glasverstärkungsmatten, Glassträngen, Glasfäden, Metalldrehspänen, Mineralpulvern oder eine Mischung von zwei oder mehreren hiervon enthält.

9. Verfahren nach einem der vorhergehenden Ansprüche, worin das Polyester- oder Polyesteramidharz in einem oder mehreren Vinylmonomeren aufgelöst ist.

10. Verfahren nach Anspruch 9, worin das Vinylmonomere Styrol ist.